# FASCICULE DE BREVET EUROPEEN

(11) **EP 3 377 680 B1**
(45) Date de publication et mention de la délivrance du brevet: **01.01.2020**
(21) Numéro de dépôt: 16815573.7
(22) Date de dépôt: 16.11.2016
(51) Int. Cl.: C25D 5/50, C25D 3/06, B32B 33/00, B32B 15/04, B32B 15/16

(54) **PIÈCE DE MOTEUR D'AÉRONEF COMPORTANT UN REVÊTEMENT DE PROTECTION CONTRE L'ÉROSION ET PROCÉDÉ DE FABRICATION D'UNE TELLE PIÈCE**
FLUGZEUGTRIEBWERKSTEIL MIT EINER EROSIONSSCHUTZSCHICHT UND VERFAHREN ZUR HERSTELLUNG SOLCH EINES TEILS
AIRCRAFT ENGINE PART COMPRISING AN EROSION PROTECTIVE COATING AND PROCESS FOR MANUFACTURING SUCH A PART

(30) Priorité: 19.11.2015 FR 1561118
(43) Date de publication de la demande: 26.09.2018
(73) Titulaire: Safran Helicopter Engines, 64510 Bordes (FR); SAFRAN, 75015 Paris (FR)
(72) Inventeur: GURT SANTANACH, Julien, 40230 Saint Vincent de Tyrosse (FR); VIOLA, Alain, 67870 Griesheim Pres Molsheim (FR); CRABOS, Fabrice, 64510 Assat (FR)
(74) Mandataire: Cabinet Beau de Loménie
(86) Numéro de dépôt international: PCT/FR2016/052967
(87) Numéro de publication internationale: WO 2017/085400

(56) Documents cités:
- WO-A2-2015/007983
- FR-A1- 2 601 044
- GB-A- 2 180 558
- US-A1- 2015 101 934

## Description

### Arrière-plan de l'invention

La présente invention se rapporte au domaine général des revêtements de protection contre l'érosion. L'invention concerne plus particulièrement une pièce de moteur d'aéronef revêtue d'un revêtement de protection contre l'érosion.

En fonctionnement, les moteurs d'avion ou d'hélicoptère aspirent de grandes quantités d'air. L'air aspiré est ensuite comprimé pour alimenter la chambre de combustion en comburant. Cet air peut être chargé de particules plus ou moins dures qui peuvent heurter des pièces fixes ou mobiles à l'intérieur du moteur. Ainsi, les pièces impactées par ces particules à haute vitesse peuvent voir leur géométrie modifiée par érosion, ce qui peut causer des défaillances du moteur.

On connaît l'utilisation de filtres à sables, notamment dans les moteurs d'hélicoptères, pour réduire la présence de particules dans le moteur. Cependant ces filtres laissent passer une petite quantité de particules qui suffisent à endommager des pièces du moteur sur le long terme.

On connaît également l'utilisation de revêtements anti-érosion déposés sur les pièces du moteur sujettes à l'érosion. Par exemple, il est connu de déposer sur une pièce des nitrures de métaux (du type TiN, TiAlN, AlCrN, etc.) par un dépôt physique en phase vapeur (PVD) ou un dépôt chimique en phase vapeur (CVD). Cependant, ces revêtements ne sont généralement pas suffisamment résistants aux températures nécessaires à la réalisation de la pièce, et les procédés permettant de former de tels revêtements ne permettent pas de revêtir des pièces de géométrie complexe.

On connait encore le dépôt par électrodéposition d'un revêtement à base de chrome hexavalent sur des pièces métalliques. Un tel procédé permet de revêtir des pièces de géométries complexes. Cependant de tels revêtements ne présentent généralement pas la dureté suffisante pour l'application de tenue à l'érosion précitée.

On connait du document GB2180558 un procédé de fabrication d'un revêtement à base de chrome comprenant une étape de dépôt par projection plasma sur une pièce d'un alliage métallique comprenant du chrome et de carbures de chrome Cr₃C₂, et une étape de traitement thermique du revêtement pendant une durée supérieure à 200 heures. Ce procédé ne permet pas de traiter des pièces de géométries complexes et présente l'inconvénient d'être long à réaliser, en raison notamment de la durée importante du traitement thermique.

Il existe donc un besoin de disposer d'une pièce de moteur d'aéronef revêtue d'un revêtement de protection contre l'érosion qui ne présente pas les inconvénients précités, ainsi que d'un procédé de fabrication d'une telle pièce.

### Objet et résumé de l'invention

La présente invention a donc pour but principal de pallier de tels inconvénients en proposant une pièce de moteur d'aéronef revêtue d'un revêtement de protection contre l'érosion qui présente une résistance à l'érosion satisfaisante dans les conditions de fonctionnement d'un moteur d'aéronef, et qui puisse être fabriquée simplement même lorsqu'elle présente une géométrie complexe.

Ce but est atteint avec une pièce de moteur d'aéronef comportant au moins un substrat métallique et un revêtement de protection contre l'érosion présent sur le substrat, le revêtement comprenant au moins une phase comportant au moins du chrome en une teneur atomique supérieure ou égale à 45% et du carbone en une teneur atomique comprise entre 5% et 20%, ladite phase comprenant des carbures de chrome Cr₇C₃ et Cr₂₃C₆.

La présence de carbures de chrome Cr₇C₃ et Cr₂₃C₆ dans le revêtement permet avantageusement d'améliorer significativement la tenue à l'érosion de la pièce revêtue. Comme il sera détaillé plus bas, ces carbures de chrome sont formés suite à un traitement thermique d'une composition de revêtement à base de chrome et de carbone formée sur le substrat. Ainsi, dans l'invention, l'application d'un traitement thermique permet de renforcer le revêtement formé en faisant précipiter les carbures Cr₇C₃ et Cr₂₃C₆. Un tel effet est inattendu dans la mesure où classiquement, avec les revêtements à base de chrome de l'art antérieur, l'application d'un traitement thermique après le dépôt sur la pièce a pour effet de réduire significativement la dureté du revêtement.

Ainsi, dans l'invention, le choix de réaliser sur le substrat un dépôt chrome/carbone présentant une teneur particulière en carbone permet avantageusement de former, après traitement thermique, un revêtement comprenant des carbures de chrome Cr₇C₃ et Cr₂₃C₆ présentant une bonne résistance à l'érosion dans l'environnement d'un moteur d'aéronef, ainsi qu'une bonne adhérence au substrat sous-jacent. La présence des carbures Cr₇C₃ et Cr₂₃C₆ est détectable notamment par diffraction des rayons X (DRX). La teneur atomique en carbone dans le revêtement doit être supérieure à 5% afin de former suffisamment de carbures Cr₇C₃ et Cr₂₃C₆ et améliorer ainsi de manière notable la dureté du revêtement. Cette teneur en carbone doit cependant être inférieure à 20% afin de ne pas affecter la tenue mécanique du revêtement.

Le revêtement de la pièce selon l'invention peut avantageusement présenter une dureté élevée, par exemple supérieure à 1500 HV (dureté Vickers). On notera que le revêtement peut en outre comprendre de l'oxygène, dans des proportions qui dépendent du procédé de fabrication du revêtement.

De préférence, la phase du revêtement comprend du chrome en une teneur atomique comprise entre 48% et 58% et du carbone en une teneur atomique comprise entre 8% et 18%.

La phase du revêtement peut comporter du chrome en une teneur atomique comprise entre 45% et 80% et du carbone en une teneur atomique comprise entre 5% et 20%. La phase du revêtement peut éventuellement comporter de l'oxygène en une teneur atomique comprise entre 15% et 40%, et éventuellement d'autres éléments en une teneur atomique inférieure ou égale à 4%, voire comprise entre 0,5% et 4%.

Dans un exemple de réalisation, la phase du revêtement peut comprendre du carbone en une teneur atomique comprise entre 12% et 18%.

Dans un exemple de réalisation, la phase du revêtement peut comprendre du chrome en une teneur atomique comprise entre 45% et 55%, par exemple comprise entre 48% et 52%.

Dans un exemple de réalisation, le chrome est le seul élément métallique présent dans la phase du revêtement.

De préférence, le revêtement comprend en outre des particules métalliques et/ou des particules céramiques. En outre, la teneur volumique dans le revêtement des particules métalliques et/ou des particules céramiques peut être inférieure à 20%, ou comprise entre 5% et 15%. De telles particules métalliques peuvent par exemple être des particules de tungstène ou de nickel, le tungstène étant préféré car il est plus lourd et plus tenace. De telles particules céramiques peuvent par exemple être des particules d'alumine ou de zircone. Les particules sont de préférence dispersées dans la phase du revêtement contenant du chrome et du carbone, ladite phase jouant alors le rôle de matrice pour les particules. Ces particules permettent d'augmenter encore la résistance à l'érosion, notamment face à des particules ingérées de taille plus élevée.

Les particules métalliques et/ou les particules céramiques peuvent avoir une taille supérieure ou égale à 1µm. Les particules métalliques et/ou les particules céramiques peuvent avoir une taille inférieure ou égale à 30 µm, par exemple comprise entre 1 µm et 30 µm. Par taille, on entend la taille moyenne D₅₀ des particules.

De préférence, une épaisseur du revêtement est comprise entre 5 µm et 100 µm.

Le substrat peut être en acier, en alliage à base d'aluminium, en alliage à base de titane, en alliage à base de nickel, ou tout autre matériau métallique pouvant être utilisé dans une turbine à gaz.

La pièce peut constituer une pièce pour moteur d'aéronef choisie parmi les suivantes : au moins une partie d'un diffuseur, au moins une partie d'un compresseur axial ou centrifuge, au moins une partie d'un distributeur, ou tout autre pièce utilisée dans une turbine et susceptible d'être soumise à un flux d'air.

L'invention vise aussi, selon un autre aspect, un procédé de fabrication d'une pièce telle que celle présentée précédemment, le procédé comportant au moins les étapes suivantes :
- dépôt sur le substrat d'une composition de revêtement comportant au moins du chrome en une teneur atomique supérieure ou égale à 45% et du carbone en une teneur atomique comprise entre 5% et 20%, et
- traitement thermique de la pièce revêtue de ladite composition à une température comprise entre 250°C et 700°C afin d'obtenir le revêtement.

Le traitement thermique permet, comme expliqué plus haut, d'obtenir un revêtement à dureté améliorée suite à la précipitation et la coalescence de carbures de chrome. Avant le traitement thermique, les carbures de chrome Cr₇C₃ et Cr₂₃C₆ ne sont pas détectables par diffraction des rayons X (DRX) dans la composition de revêtement. Cette dernière peut être dépourvue de ces carbures. En variante, la composition de revêtement peut déjà comprendre les carbures Cr₇C₃ et Cr₂₃C₆ mais ces derniers présentent une taille moyenne (D50) inférieure ou égale à 10 nm, ne permettant pas leur détection par DRX.

La température du traitement thermique peut être préférentiellement comprise entre 300°C et 600°C, ou encore plus préférentiellement entre 300°C et 500°C, par exemple entre 400°C et 500°C. La durée du traitement thermique pourra être adaptée notamment en fonction de la dureté souhaitée pour le revêtement. La durée de ce traitement thermique peut être supérieure à 10 minutes, par exemple supérieure à 15 minutes ou encore supérieure à 30 minutes. La durée de traitement thermique peut être par exemple comprise entre 15 minutes et 280 minutes. La durée du traitement thermique pourra être adaptée en fonction de la température choisie et la dureté voulue pour le revêtement.

En outre, la composition de revêtement est déposée sur le substrat par électrodéposition à partir d'un bain électrolytique comprenant au moins du chrome trivalent et un composé organique. Dans ce cas, la pièce à revêtir peut constituer la cathode du dispositif d'électrodéposition, afin que la réduction des ions chromes se produise sur la pièce. Une telle étape de dépôt par électrodéposition est avantageuse car elle permet de déposer la composition de revêtement sur des pièces de géométrie complexe facilement, tout en assurant un contrôle accru de la formation du revêtement. En effet, il est aisé de modifier les paramètres de l'électrodéposition, comme la tension, le courant, ou la surface des électrodes, par exemple pour contrôler finement l'épaisseur du revêtement, sa vitesse de formation et la microstructure du revêtement. En outre, la présence de chrome trivalent qui est généralement complexé par des ligands organiques dans le bain électrolytique, permet de déposer en même temps le chrome et le carbone du revêtement. On notera que de l'oxygène peut être également intégré dans le revêtement sur la pièce par ce procédé.

Le dépôt par électrodéposition de la composition de revêtement permet de réduire la durée du traitement thermique réalisé postérieurement au dépôt. En effet, l'électrodéposition permet d'obtenir une répartition homogène du carbone dans la composition de revêtement déposée, ce qui n'est généralement pas le cas avec d'autres techniques de dépôt comme la projection plasma. Cette répartition homogène du carbone permet ensuite de réduire avantageusement la durée du traitement thermique nécessaire pour former ou développer les carbures de chrome Cr₇C₃ et Cr₂₃C₆ afin d'augmenter la dureté du revêtement.

De préférence également, le bain électrolytique comprend en outre des particules métalliques et/ou des particules céramiques en suspension. Lors de l'électrodéposition de la composition de revêtement, les particules en suspension sont intégrées dans la composition de revêtement de façon homogène et en continu. Ainsi, aucune étape supplémentaire n'est nécessaire pour intégrer les particules dans le revêtement.

Un courant continu ou un courant pulsé peut être utilisé lors de l'électrodéposition. Le choix d'un courant continu ou pulsé dépend généralement de la microstructure et de l'épaisseur souhaitées pour le revêtement.

Le procédé peut également comprendre une étape de dégraissage de la surface du substrat et une étape de préparation de la surface du substrat, préalablement à l'étape de dépôt de la composition de revêtement sur le substrat. L'étape de préparation de la surface peut par exemple être réalisée par attaque chimique (par exemple une attaque acide), par sablage, etc.

### Brève description des dessins

D'autres caractéristiques et avantages de la présente invention ressortiront de la description faite ci-dessous, en référence aux dessins annexés. Sur les figures :
- la figure 1 est une vue schématique en coupe d'une pièce de moteur d'aéronef revêtue d'un revêtement de protection contre l'érosion,
- la figure 2 est un ordinogramme représentant les principales étapes d'un procédé de fabrication d'une pièce revêtue selon l'invention,
- la figure 3 est une vue schématique en coupe d'un dispositif utilisé pour électrodéposer une composition de revêtement selon l'invention,
- la figure 4A montre l'influence de la température du traitement thermique sur la dureté du revêtement d'une pièce selon l'invention, et
- la figure 4B montre l'influence de la température d'un traitement thermique après dépôt d'un revêtement à base de chrome de l'art antérieur.

### Description détaillée de l'invention

Dans tout l'exposé, l'expression « compris entre ... et ... » doit être comprise comme incluant les bornes.

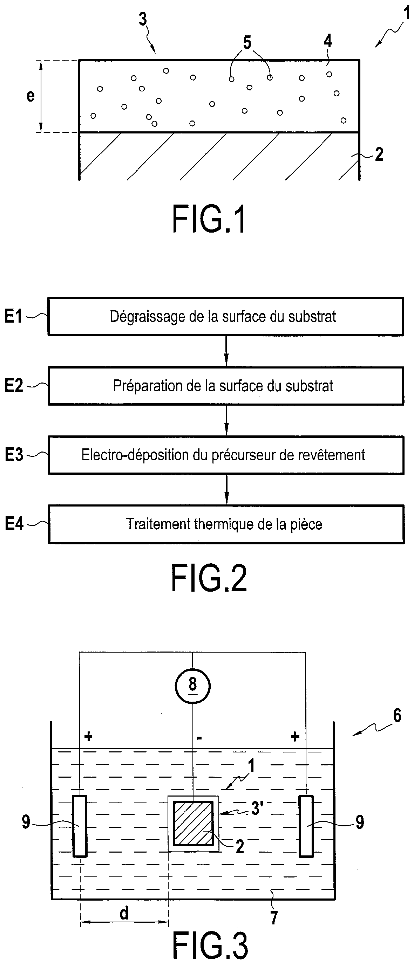

La figure 1 représente de façon schématique une vue en coupe au niveau de la surface d'une pièce 1 de moteur d'aéronef selon l'invention, pouvant par exemple être constituée par un diffuseur de turbomoteur.

Une telle pièce 1 comprend un substrat métallique 2, par exemple de l'acier, de l'aluminium, du titane, un alliage à base d'aluminium, un alliage à base de titane, ou un alliage à base de nickel. Le substrat 2 est revêtu par un revêtement de protection 3 contre l'érosion. Le revêtement de protection 3 contre l'érosion est ici directement au contact du substrat 2 et le recouvre. De préférence, le revêtement 3 présente une épaisseur e comprise entre 5 µm et 100 µm.

Conformément à l'invention, le revêtement 3 comprend une phase 4, majoritaire en masse dans le revêtement, comprenant une base de chrome et du carbone. Plus précisément, la phase 4 comprend du chrome en une teneur atomique supérieure ou égale à 45%, et du carbone en une teneur atomique comprise entre 5% et 20%. Le chrome et le carbone à l'intérieur de la phase 4 du revêtement 3 sont notamment présents sous forme de carbures de chrome, du type Cr₇C₃ et Cr₂₃C₆.

Le revêtement 1 peut comprendre également une phase dispersée 5 au sein de la phase 4 de chrome et de carbone, comprenant des particules métalliques et/ou céramiques. De telles particules métalliques peuvent être par exemple des particules de tungstène ou de nickel. De telles particules céramiques peuvent être par exemple des particules d'alumine ou de zircone. La teneur volumique dans le revêtement des particules métalliques et/ou des particules céramiques est préférentiellement inférieure à 20%, ou encore plus préférentiellement, comprise entre 5% et 15%. Les particules métalliques et/ou les particules céramiques peuvent avoir une taille comprise entre 1 µm et 30 µm.

Ainsi, le revêtement peut être formé de la phase 4 comprenant du chrome et du carbone dans laquelle sont dispersées des particules métalliques et/ou des particules céramiques 5. Dans une variante non illustrée, le revêtement 3 peut être uniquement formé de la phase 4 comprenant du chrome et du carbone.

Un procédé de fabrication d'une pièce de moteur d'aéronef 1 selon l'invention va maintenant être décrit en référence à l'ordinogramme de la figure 2 et au schéma illustrant un dispositif d'électrodéposition 6 de la figure 3. Le procédé qui va être décrit comprend une étape d'électrodéposition d'une composition de revêtement 3'. Bien entendu, l'invention ne se limite pas au dépôt par électrodéposition de la composition de revêtement, d'autres techniques étant disponibles pour obtenir la pièce revêtue selon l'invention. On citera à titre d'exemple les techniques de dépôt physique en phase vapeur, de dépôt chimique en phase vapeur, ou encore la cémentation.

Une première étape du procédé (étape E1) peut consister à dégraisser la surface du substrat sur laquelle on va déposer une composition de revêtement, par exemple au moyen d'une solution aqueuse dégraissante. On peut ensuite préparer la surface du substrat (étape E2) afin de s'assurer que l'électrodéposition sera homogène sur le substrat 2 et afin d'augmenter son efficacité. Pour préparer la surface on peut, de façon connue en soi, la sabler, l'attaquer chimiquement (par exemple avec une solution acide), etc.

On peut ensuite préparer un bain électrolytique 7, qui comprend au moins des ions chromes III (chrome trivalent), et un composé organique complexant pour les ions chrome. On peut par exemple avoir recours à des solutions aqueuses connues comprenant du chlorure de chrome III et un acide carboxylique comme agent complexant. Le bain électrolytique 7 peut éventuellement être chauffé au cours de l'étape d'électrodéposition. En outre, le bain électrolytique peut comprendre des particules métalliques et/ou céramiques en suspension, du type de celles présentées précédemment, afin qu'elles soient intégrées à la composition de revêtement pendant l'électrodéposition.

La pièce 1 dont la surface a été préparée peut ensuite être connectée à la borne négative (jouant le rôle de cathode) d'un générateur 8 de courant et immergée dans le bain électrolytique 7 préparé précédemment. Dans le dispositif 6 de la figure 3, deux électrodes 9 jouant le rôle d'anodes sont connectées à la borne positive du générateur 8 et immergées dans le bain 7, de façon à ce que la pièce 1 se trouve entre les deux électrodes 9 dans le bain. Le rapport de la surface d'anode (correspondant à la surface utile des deux électrodes 9) sur la surface de cathode (correspondant à la surface du substrat 2 à revêtir de la pièce) est de préférence de l'ordre de 4. Les électrodes 9 formant les anodes sont de préférences éloignées de la surface de la pièce d'une distance d comprise entre 1 cm et 20 cm.

Le générateur 8 est ensuite allumé pour amorcer l'électrodéposition de la composition de revêtement 3' sur la pièce (étape E3). Durant cette étape, le chrome III est réduit sur le substrat 2 de la pièce 1, pour former la composition de revêtement 3' comprenant du chrome, du carbone (issu du composé organique présent dans le bain) et des particules métalliques et/ou céramiques qui étaient en suspension dans le bain. On pourra adapter les paramètres tels que le courant surfacique, la température du bain et la durée de l'électrodéposition en fonction notamment de l'épaisseur du revêtement que l'on souhaite obtenir. En outre, il est possible de réaliser l'électrodéposition en utilisant un courant continu ou un courant pulsé.

Une fois la pièce revêtue de la composition de revêtement 3', elle est rincée et séchée, puis placée dans un four. On procède ensuite au traitement thermique (étape E4) de la pièce 1 munie de la composition de revêtement 3' à une température préférentiellement comprise entre 250°C et 700°C, ou plus préférentiellement comprise entre 300°C et 600°C, ou encore plus préférentiellement comprise entre 400°C et 500°C. Le traitement thermique peut être effectué sous atmosphère inerte. La durée de ce traitement thermique peut être supérieure à 10 minutes, par exemple supérieure à 15 minutes ou encore supérieure à 30 minutes. La durée de traitement thermique peut être par exemple comprise entre 15 minutes et 280 minutes. La durée du traitement thermique pourra être adaptée en fonction de la température choisie et la dureté voulue pour le revêtement.

Le revêtement 3 de la pièce 1 selon l'invention obtenue suite à l'étape de traitement thermique peut présenter une dureté de plus de 1500 HV (dureté Vickers), et présente une résistance à l'érosion suffisante pour une application dans un moteur d'aéronef.

La pièce 1 peut par exemple constituer au moins une partie d'un diffuseur de turbopropulseur, au moins une partie d'un compresseur axial ou centrifuge, par exemple un rouet centrifuge, au moins une partie d'un distributeur, ou toute autre pièce d'une turbomachine qui peut être soumise à un flux d'air.

### Exemple 1

Dans l'exemple suivant, une pièce de diffuseur de turbopropulseur en acier est revêtue d'un revêtement par un procédé selon l'invention. Les surfaces à revêtir ont été préalablement dégraissées et préparées.

Le dépôt de la composition de revêtement est effectué par électrodéposition dans un bain électrolytique. Le bain électrolytique utilisé est une solution aqueuse comprenant :
- 0,39 mol/L de chlorure de chrome III hexa hydraté (CrCl₃;6H₂O),
- 3,72 mol/L de formiate d'ammonium (NH₄COOH), et
- 0,81 mol/L de chlorure de potassium (KCl).

Le bain est chauffé à environ 35°C pour effectuer l'électrodéposition. La pièce est immergée dans le bain et connectée à la borne négative du générateur de courant. Les électrodes formant anodes sont immergées dans le bain et connectées au générateur, comme décrit précédemment. Le rapport de la surface d'anode sur la surface de cathode est égal à 4.

Un courant continu de 40 A/dm² est imposé pendant 180 minutes de façon à former sur le substrat la composition de revêtement. Une fois l'électrodéposition effectuée, la pièce est rincée et séchée.

On dispose enfin la pièce revêtue de la composition de revêtement dans un four, et un traitement thermique à 500°C pendant 1 heures lui est imposé.

Le revêtement présente une épaisseur d'environ 35 µm.

La dureté du revêtement ainsi formé est d'environ 2050 HV (dureté Vickers).

La composition chimique du revêtement ainsi formé (teneurs atomiques), évaluée par spectrométrie photoélectronique X (« XPS ») est donnée dans le tableau 1 ci-dessous.

**Tableau 1 - Teneurs atomiques en éléments dans le revêtement**

| **Élément** | **C** | **Cr** | **N** | **O** |
|---|---|---|---|---|
| % atomique | 15,4 | 52,6 | 1,4 | 30,6 |

L'analyse du revêtement par diffraction des rayons X (DRX) a également montré la présence de carbures de chrome du type Cr₇C₃ et Cr₂₃C₆.

### Exemple 2

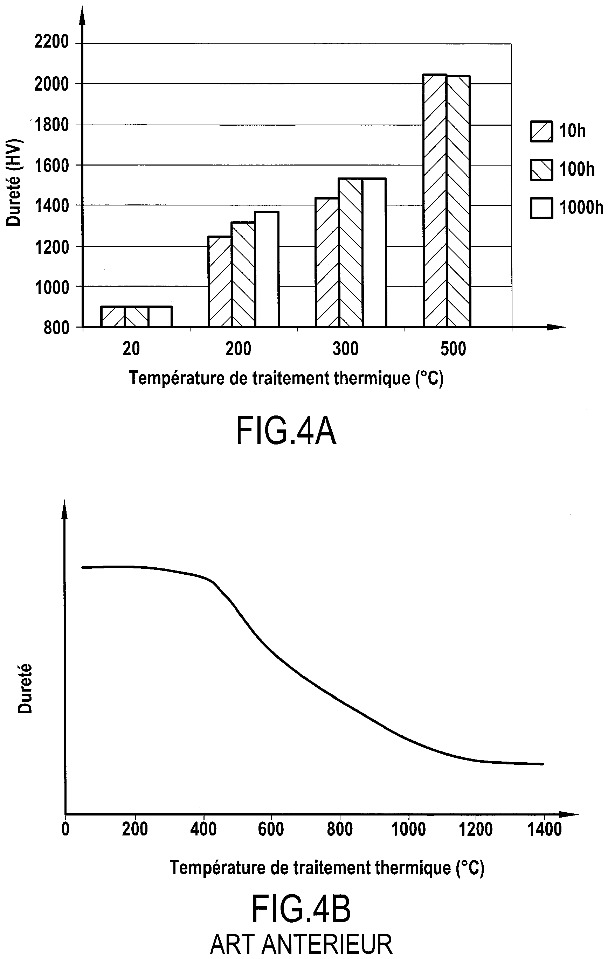

On a revêtu onze substrats en acier dans les mêmes conditions que dans l'exemple 1 en faisant varier les paramètres du traitement thermique (température et durée). Les résultats sont représentés sur le graphe de la figure 4A.

On a repris sur la figure 4B un graphe montrant l'évolution de la dureté d'un revêtement à base de chrome déposé par électrodéposition à partir d'une solution de chrome VI sur un substrat, en fonction de la température d'un traitement thermique réalisé après le dépôt. Le bain électrolytique utilisé est une solution standard à base d'acide chromique ayant une concentration de l'ordre de 250 g/L en CrO₃, la solution comprenant en outre 2,5 g/L d'acide sulfurique H₂SO₄. Pour effectuer le dépôt, un courant à 40 A/dm² a été utilisé. Ces données sont extraites des travaux de F. Durut : « Recherche des mécanismes microstructuraux qui régissent les propriétés macroscopiques de dépôts de chrome : influence des paramètres d'élaboration », Engineering Sciences [physics], Ecole Nationale Supérieure des Mines de Saint-Etienne, 1999.

On observe que, pour le revêtement à base de chrome de l'art antérieur (figure 4B), un traitement thermique effectué après le dépôt n'augmente pas la dureté du revêtement. Plus précisément, on observe que la dureté n'évolue pas ou sensiblement pas jusqu'à des températures de traitement thermique de 400°C, puis qu'elle diminue.

A l'inverse, on observe que, pour le revêtement d'une pièce selon l'invention comprenant du chrome et du carbone (figure 4A), la dureté du revêtement augmente avec la température du traitement thermique effectué après le dépôt. Cette figure montre également que la durée du traitement thermique n'a pas une incidence importante sur la dureté du revêtement pour des durées de traitement thermique supérieures à 10 heures.

## Revendications

1. Procédé de fabrication d'une pièce (1) de moteur d'aéronef comportant au moins un substrat métallique (2) et un revêtement de protection (3) contre l'érosion présent sur le substrat, le revêtement comprenant au moins une phase (4) comportant au moins du chrome en une teneur atomique supérieure ou égale à 45% et du carbone en une teneur atomique comprise entre 5% et 20%, ladite phase comprenant des carbures de chrome Cr₇C₃ et Cr₂₃C₆, le procédé comportant au moins les étapes suivantes :
- dépôt sur le substrat (2) d'une composition de revêtement (3') comportant au moins du chrome en une teneur atomique supérieure ou égale à 45% et du carbone en une teneur atomique comprise entre 5% et 20%, la composition de revêtement (3') étant déposée sur le substrat par électrodéposition à partir d'un bain électrolytique (7) comprenant au moins du chrome trivalent et un composé organique, et
- traitement thermique de la pièce revêtue de ladite composition à une température comprise entre 250°C et 700°C afin d'obtenir le revêtement (3).

2. Procédé selon la revendication 1, dans lequel la température du traitement thermique est comprise entre 300°C et 600°C.

3. Procédé selon l'une quelconque des revendications 1 et 2, dans lequel le bain électrolytique (7) comprend en outre des particules métalliques et/ou des particules céramiques en suspension, le revêtement obtenu comprenant en outre les particules métalliques et/ou les particules céramiques (5).

4. Procédé selon l'une quelconque des revendications 1 à 3, dans lequel une épaisseur (e) du revêtement est comprise entre 5 µm et 100 µm.

5. Procédé selon l'une quelconque des revendications 1 à 4, dans lequel le substrat (2) est en acier, en alliage à base d'aluminium, en alliage à base de titane, ou en alliage à base de nickel.

6. Procédé selon l'une quelconque des revendications 1 à 5, dans lequel la pièce (1) constitue une pièce pour moteur d'aéronef choisie parmi les suivantes : au moins une partie d'un diffuseur, au moins une partie d'un compresseur axial ou centrifuge, au moins une partie d'un distributeur.

7. Procédé selon l'une quelconque des revendications 1 à 6, dans lequel la durée du traitement thermique est comprise entre 15 minutes et 280 minutes.

8. Procédé selon l'une quelconque des revendications 1 à 7, dans lequel la phase du revêtement comprend du carbone en une teneur atomique comprise entre 12% et 18%.

9. Procédé selon l'une quelconque des revendications 1 à 8, dans lequel la phase du revêtement comprend du chrome en une teneur atomique comprise entre 45% et 55%.

## Patentansprüche

1. Verfahren zur Herstellung eines Teils (1) eines Flugzeugtriebwerks, mit wenigstens einem Metallsubstrat (2) und einer auf dem Substrat vorhandenen Erosionsschutzbeschichtung (3), wobei die Beschichtung wenigstens eine Phase (4) umfasst, die wenigstens Chrom in einem Atomgehalt von mehr als oder gleich 45 % sowie Kohlenstoff in einem Atomgehalt im Bereich zwischen 5 % und 20 % umfasst, wobei die Phase Chromcarbide Cr₇C₃ und Cr₂₃C₆ umfasst, wobei das Verfahren wenigstens die folgenden Schritte umfasst:
- Abscheiden einer Beschichtungszusammensetzung (3') auf dem Substrat (2), die wenigstens Chrom in einem Atomgehalt von mehr als oder gleich 45 % sowie Kohlenstoff in einem Atomgehalt im Bereich zwischen 5 % und 20 % umfasst, wobei die Beschichtungszusammensetzung (3') durch Elektroplattieren aus einem elektrolytischen Bad (7), das wenigstens dreiwertiges Chrom und eine organische Verbindung enthält, auf dem Substrat abgeschieden wird, und
- Wärmebehandlung des mit der Zusammensetzung beschichteten Teils bei einer Temperatur im Bereich zwischen 250 °C und 700 °C, um die Beschichtung (3) zu erhalten.

2. Verfahren nach Anspruch 1, bei dem die Temperatur der Wärmebehandlung im Bereich zwischen 300 °C und 600 °C liegt.

3. Verfahren nach einem der Ansprüche 1 und 2, bei dem das elektrolytische Bad (7) ferner Metallpartikel und/oder Keramikpartikel in Suspension enthält, wobei die erhaltene Beschichtung weiterhin die Metallpartikel und/oder die Keramikpartikel (5) umfasst.

4. Verfahren nach einem der Ansprüche 1 bis 3, bei dem eine Dicke (e) der Beschichtung zwischen 5 µm und 100 µm liegt.

5. Verfahren nach einem der Ansprüche 1 bis 4, bei dem das Substrat (2) aus Stahl, aus einer Legierung auf Aluminiumbasis, aus einer Legierung auf Titanbasis oder aus einer Legierung auf Nickelbasis besteht.

6. Verfahren nach einem der Ansprüche 1 bis 5, bei dem das Teil (1) ein Teil für ein Flugzeugtriebwerk bildet, das aus den Folgenden ausgewählt ist: wenigstens einem Teil eines Diffusors, wenigstens einem Teil eines Axial- oder Radialverdichters, wenigstens einem Teil eines Verteilers.

7. Verfahren nach einem der Ansprüche 1 bis 6, bei dem die Dauer der Wärmebehandlung zwischen 15 Minuten und 280 Minuten beträgt.

8. Verfahren nach einem der Ansprüche 1 bis 7, bei dem die Phase der Beschichtung Kohlenstoff in einem Atomgehalt im Bereich zwischen 12 % und 18 % umfasst.

9. Verfahren nach einem der Ansprüche 1 bis 8, bei dem die Phase der Beschichtung Chrom in einem Atomgehalt im Bereich zwischen 45 % und 55 % umfasst.

## Claims

1. A method of fabricating an aircraft engine part (1) comprising at least a metal substrate (2) and a protective coating (3) for protection against erosion that is present on the substrate, the coating comprising at least one phase (4) comprising at least chromium at an atom content greater than or equal to 45% and carbon at an atom content lying in the range 5% to 20%, said phase comprising Cr₇C₃ and Cr₂₃C₆ chromium carbides, the method comprising at least the following steps:
- depositing on the substrate (2) a coating composition (3') comprising at least chromium at an atom content greater than or equal to 45% and carbon at an atom content lying in the range 5% to 20%, the coating composition (3') being deposited on the substrate by electroplating from an electrolyte bath (7) comprising at least trivalent chromium and an organic compound; and
- subjecting the part coated with said composition to heat treatment at a temperature lying in the range 250°C to 700°, in order to obtain the coating (3).

2. A method according to claim 1, wherein the heat treatment temperature lies in the range 300°C to 600°C.

3. A method according to claim 1 or claim 2, wherein the electrolyte bath (7) further comprises metal particles and/or ceramic particles in suspension, the resulting coating further including metal particles and/or ceramic particles (5).

4. A method according to any one of claims 1 to 3, wherein a thickness (e) of the coating lies in the range 5 µm to 100 µm.

5. A method according to any one of claims 1 to 4, wherein the substrate (2) is made of steel, of aluminum-based alloy, of titanium-based alloy, or of nickel-based alloy.

6. A method according to any one of claims 1 to 5, wherein the part (1) constitutes an aircraft engine part selected from the following: at least a portion of a diffuser; at least a portion of an axial or centrifugal compressor; at least a portion of a nozzle.

7. A method according to any one of claims 1 to 6, wherein the duration of the heat treatment lies in the range 15 min to 280 min.

8. A method according to any one of claims 1 to 7, wherein the coating phase comprises carbon at an atom content lying in the range 12% to 18%.

9. A method according to any one of claims 1 to 8, wherein the coating phase comprises chromium at an atom content lying in the range 45% to 55%.
